(19) Europäisches Patentamt
European Patent Office
Office européen des brevets

(11) **EP 1 016 985 A2**

(12) **EUROPEAN PATENT APPLICATION**

(43) Date of publication:
05.07.2000 Bulletin 2000/27

(51) Int. Cl.$^7$: **G06F 17/30**

(21) Application number: **99125832.8**

(22) Date of filing: **23.12.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **30.12.1998 US 223294**

(71) Applicant: **Xerox Corporation
Rochester, New York 14644 (US)**

(72) Inventors:
• **Wilcox, Lynn D.
Portola Valley, California 94028 (US)**

• **Kimber, Donald G.
No.3 Mountain View, California 94040 (US)**
• **Hearst, Marti A.
Kensington, California 94708 (US)**
• **Harrison, Steven R.
Portola Valley, California 94028 (US)**
• **Moran, Thomas P.
Palo Alto, California 94301 (US)**

(74) Representative:
**Grünecker, Kinkeldey,
Stockmair & Schwanhäusser
Anwaltssozietät
Maximilianstrasse 58
80538 München (DE)**

(54) **Method and system for topic based cross indexing of text and audio**

(57)     A system and method directed to cross indexing of text and audio based on defined topics is provided. This system and method associate segments of audio with related portions of text. Cross indexing is performed by initially using the related text to define topics. Segments of audio corresponding to these topics are then located based on the occurrence of specific keywords in the audio.

FIG.5

**Description**

This invention relates to a system and method directed to cross indexing of text and audio based on defined topics. More particularly, this invention associates segments of audio recordings with related portions of text documents discussed on the recording. Cross indexing is performed by initially using the related text document(s) to define topics and keywords. Segments of the audio recording corresponding to these topics are then located based on the occurrence of the keywords therein.

None of the prior known references disclose a system and method for correlating text of documents and related audio recordings using a topic-based cross-index. Thus, the present invention contemplates a new system and method for topic based cross-indexing text and audio which provides advantages not heretofore experienced through use of prior known technology.

A method and system for correlating text contained in at least one electronically stored document and recorded audio corresponding to a discussion of the document is provided. Topic based cross-indexing is used to correlate the text with the audio.

In one aspect of the invention, the method implemented in the system comprises determining topics reflected in the text, determining keywords contained in the text and probabilities that a keyword belongs to a topic, constructing a topic segmentation network based on the keywords and the probabilities, inputting acoustic features of the recorded audio to the topic segmentation network, determining the most probable path through the segmentation network given the acoustic features, and segmenting the audio into the topics based on that path.

In another aspect of the invention, the method implemented in the system comprises the steps of determining topics reflected in the text, determining keywords contained in the text and probabilities that a keyword belongs to a topic, constructing a topic segmentation network based on the keywords and the probabilities, inputting acoustic features of the recorded audio to a keyword spotter to determine a number of occurrences of keywords within a predetermined time interval, inputting the number of occurrences to the topic segmentation network, determining the most probable path through the segmentation network given the observed numbers of keyword occurrences, and segmenting the audio into the topics based on that path.

In a further aspect of the invention, a means for implementing the method is provided.

Figure 1 illustrates a representation of topic based cross-indexing;
Figure 2 is a flowchart illustrating a method according to the present invention;
Figure 3 illustrates a Hidden Markov Model for a keyword topic model;
Figure 4 illustrates a topic segmentation network;
Figure 5 is a flowchart illustrating an alternative method according to the present invention;
Figure 6 is a flowchart illustrating another method according to the present invention; and,
Figure 7 illustrates an exemplary system according to the present invention.

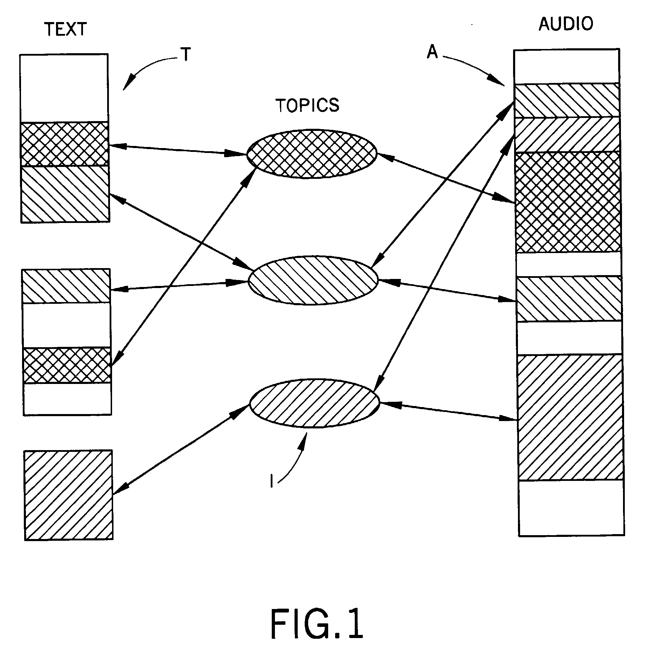

The drawings are provided for the purpose of illustrating the preferred embodiments of the invention only and not for purposes of limiting same. With reference now to Figure 1, the invention relates to a method and system to create a cross index I between segments of audio A and portions of related text T. Indexing is performed by defining an intermediary set of topics to act as the index I which correlate the text T and the audio A. The cross-index I may take any suitable, convenient form and, in the present invention, will be based on the topic segmentation information obtained by the system and/or method.

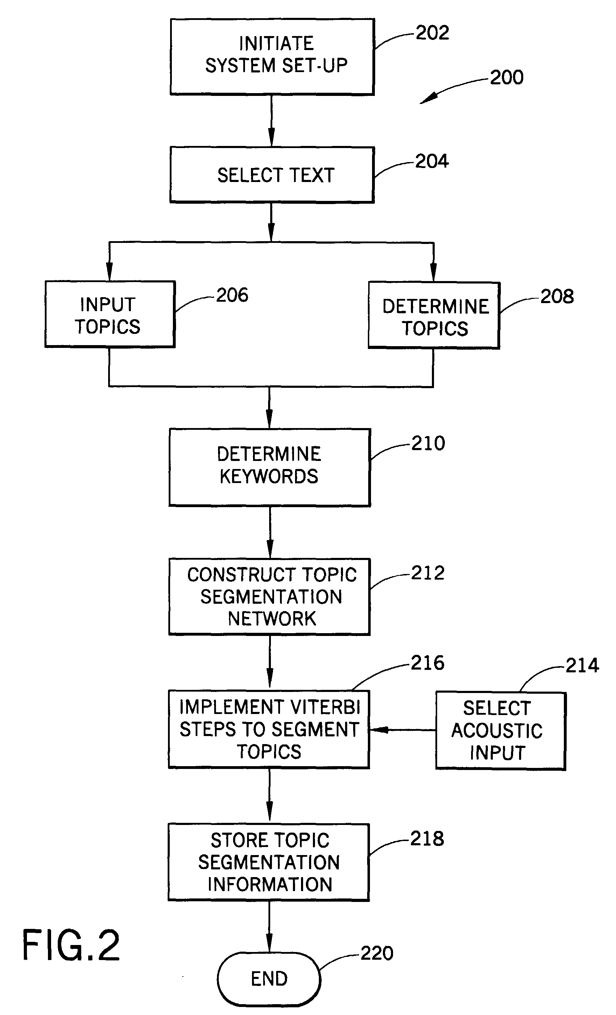

Figure 2 is a flowchart illustrating a method according to the present invention. The method shown relates to the initial setup, or initialization, of the system to correlate selected electronically stored text documents and audio recordings by creating the cross index noted above. Of course, it is recognized that this method may be implemented after the audio recording incorporating discussions of the electronically stored text documents has been made available to the user. In this regard, the audio recording may be digitally stored in the system or stored on a peripheral device that communicates with the system. In appropriate circumstances, the segmentation models could be produced in advance, and the segmentation then performed on audio in real time.

It is to be appreciated that the steps of the methods described herein and elements of the system may be embodied in a variety of manners and forms well known to those of skill in the art. For example, the method steps are primarily embodied in suitable software routines but may also be implemented by selected hardware.

As shown, the user starts the method 200 by initiating the system setup (step 202). Next, the relevant electronically stored text is selected (step 204). At this point, topics included in the selected text are determined. This determination may actually be made by the user and input to the system (step 206), automatically determined by the system (step 208) using known methods, or a suitable combination of both.

In this regard, a topic is a label that applies to a portion of text or a segment of speech to classify its subject. Topics are usually derived from portions of corresponding text, although topics may also be pre-specified concepts. In the context of the present invention, topics are represented by keywords and their frequencies, although topics may also be described by more complex language models.

More specifically, as to step 206 wherein the user defines the topics, one way of so defining is by designating a different text document for each topic. For example, in creating a cross index between a recorded meeting and the documents discussed during that meeting, a user defines topics by suitably designating, as each topic, a different document -- or preferably an electronically stored text version thereof The cross index, in this embodiment, allows a user to efficiently locate discussions of a particular document in the recorded meeting.

Another technique for a user to define topics is to use one or more text documents which have been segmented into sub-topic regions. The sub-topic regions might be the sections of the document as defined by the author.

Topics can also be defined by the user with pre-specified concepts. For example, in written, electronically stored documents, these concepts might be CONCEPT 1, CONCEPT 2 or CONCEPT 3. A recorded meeting could then be indexed according to discussion of these concepts. If the meeting was also indexed according to documents, it would be possible to locate a discussion on CONCEPT 1, for example, in a specific document. The notion of using prespecified concepts would adapt well to the present invention provided the prespecified concepts reflected the sections of text.

Alternately, according to step 208, sub-topic regions could be determined automatically by the system. This may be accomplished by any of a number of known techniques. However, preferably, it is accomplished by finding sub-topic boundaries, and then merging those regions having the same sub-topic. Topics are thus defined by the portions of text corresponding to the sub-topics of the document. For example, in generating a cross index between a recorded conference talk and the corresponding conference papers, the topics could be defined by the sections of the paper. The cross index would allow a user reading the paper to locate in the audio recording of the talk a verbal discussion of a particular section.

More specifically, sub-topic boundaries in the text are found using the "text tiling" algorithm proposed in Hearst, "Multi-Paragraph Segmentation of Expository Texts," UC Berkely Computer Science Technical Report, No. UCB/CSD 94/790, pp. 1-11 (January 1994); Hearst, "Segmenting Text into Multi-Paragraph Subtopic Passages", Computational Linguistics, vol. 23, no. 1, pp. 33-64 (March 1997); and, Hearst, "Multi-Paragraph Segmentation of Expository Text", Proceedings of the 32nd Meeting of the Association for Computational Linguistics -- Las Cruces, N.M., pp. 9-16 (June 1994). This technique does not require the set of topics to be known in advance, but rather infers boundaries based on term grouping patterns.

As described in Hearst, "Multi-Paragraph Segmentation of Expository Text", Proceedings of the 32nd Meeting of the Association for Computational Linguistics - - Las Cruces, N.M., pp. 9-16 (June 1994), the core algorithm has three main parts: tokenization, similarity determination, and boundary identification.

Tokenization refers to the division of the input text into individual lexical units. The text is subdivided into psuedosentences of a pre-defined size $w$ (a parameter of the algorithm) rather than actual syntactically-determined sentences, thus circumventing normalization problems. For the purposes of the rest of the discussion these groupings of tokens will be referred to as *token-sequences*. In practice, setting $w$ to 20 tokens per token sequence works best for many texts. The morphologically-analyzed token is stored in a table along with a record of the token-sequence number it occurred in, and how frequently it appeared in the token-sequence. A record is also kept of the locations of the paragraph breaks within the text. Closed-class and other very frequent words are eliminated from the analysis.

After tokenization, the next step is the comparison of adjacent pairs of blocks of token sequences for overall lexical similarity. Another important parameter for the algorithm is the *blocksize*, the number of token-sequences that are grouped together into a block to be compared against an adjacent group of token-sequences. This value, labeled k, varies slightly from text to text; as a heuristic it is the average paragraph length (in token-sequences). In practice, a value of k=6 works well for many texts. Actual paragraphs are not used because their lengths can be highly irregular, leading to unbalanced comparisons.

Similarity values are computed for every token-sequence gap number; that is, a score is assigned to token-sequence gap (i) corresponding to how similar the token-sequences from token-sequence (i-k) through (i) are to the token-sequences from (i+1) to (i+k+1) . Note that this moving window approach means that each token-sequence appears in (k*2) similarity computations.

Similarity between blocks is calculated by a cosine measure. In this regard, given two text blocks $b_1$ and $b_2$, each with k token-sequences, the similarity sim is as follows:

$$sim(b_1, b_2) = \frac{\sum_t w_{(t,b_1)} w_{(t,b_2)}}{\sqrt{\frac{\sum_t w^2_{(t,b_1)}}{n} \sum_{t=1}^{n} w^2_{(t,b_2)}}}$$

where t ranges over all the terms that have been registered during the tokenization step, and $w_{\{t,b1\}}$ is the weight assigned to term t in block $b_1$. In this version of the algorithm, the weights on the terms are simply their frequency within the block. Earlier work weighted the terms according to their frequency times their inverse document frequency. In these more recent experiments, simple term frequencies seem to work better. Thus, if the similarity score between two blocks is high, then the blocks have many terms in common. This formula yields a score between 0 and 1, inclusive.

These scores can be plotted, token-sequence number against similarity score. However, since similarity is measured between blocks $b_1$ and $b_2$, where $b_1$ spans token-sequences (i-k) through (i) and $b_2$ spans (i+1) to (i+k+1), the measurement's x-axis coordinate falls between token-sequences (i) and (i+ 1). Rather than plotting a token-sequence number on the x-axis, we plot token-sequence *gap* number (i). The plot is smoothed with average smoothing. In practice, one round of average smoothing with a window size of three works best for most texts.

Boundaries are determined by changes in the sequence of similarity scores. The token-sequence gap numbers are ordered according to how steeply the slopes of the plot are to either side of the token-sequence gap, rather than by their absolute similarity score. For a given token-sequence gap (i), the algorithm looks at the scores of the token-sequence gaps to the left of (i) as long as their values are increasing. When the values to the left peak out, the difference between the score at the peak and the score at (i) is recorded. The same procedure takes place with the token-sequence gaps to the right of (i); their scores are examined as long as they continue to rise. The relative height of the peak to the right of (i) is added to the relative height of the peak to the left. (A gap occurring at a peak will have a score of zero since neither of its neighbors is higher than it.) These new scores, called depth scores, corresponding to how sharp a change occurs on both sides of the token-sequence gap, are then sorted. Segment boundaries are assigned to the token-sequence gaps with the largest corresponding scores, adjusted as necessary to correspond to true paragraph breaks. A proviso check is done that prevents assignment of very close adjacent segment boundaries. There should be at least three intervening token-sequences between boundaries. This helps control for the fact that many texts have spurious header information and single-sentence paragraphs.

The algorithm must determine how many segments to assign to a document, since every paragraph is a potential segment boundary. Any attempt to make an absolute cutoff is problematic since there would need to be some correspondence to the document style and length. A cutoff based on a particular valley depth is similarly problematic.

A technique is known for determining the number of boundaries to assign the scales with the size of the document and is sensitive to the patterns of similarity scores that it produces. The cutoff is a function of the average and standard deviations of the depth scores for the text under analysis.

Although adjacent sub-topic segments will differ in topic, some sub-topic segments may in fact describe similar topics. Therefore, a separate step is required to merge segments that discuss the same topic.

One approach is to determine, for each segment, the set of notable terms whose weight contributed most to the identification of that segment's boundaries. Segments can be clustered according to their notable terms, and those that cluster closely are assumed to discuss approximately the same sub-topic. Any suitable clustering algorithm can be applied, for example, the well known hierarchical agglomerative clustering algorithm. In such an algorithm, each segment is initially its own cluster and the closest two clusters are then merged to form a new cluster. The process is repeated until the smallest distance between any two clusters exceeds a predetermined threshold. The distance between segments can be the same as that in Hearst, "Multi-Paragraph Segmentation of Expository Texts," UC Berkely Computer Science Technical Report, No. UCB/CSD 94/790, pp. 1-11 (January 1994). This analysis can be done across several related documents as well, that is, several documents written by the same author. Relative term distribution can be taken into account to improve results, if necessary.

A combination of user input and system determination of topics may also be implemented. Those of skill in the art will recognize that appropriate alternatives to the method may be required to accommodate such a combination.

Once the topics have been derived from the related text, keywords in the text and the probabilities that the keywords belong to specific topics are computed or determined (step 210). In this regard, keywords are preferably selected so as to maximize the mutual information between keywords and topics. This can be done using well known techniques. Alternately, keywords can be selected using the well-known CHI-square statistic, which measures the variations in frequency of keywords in the various topics. In any event, keywords and the probability that those keywords belong to a topic are important determinations.

More particularly, in the preferred embodiment, keywords are selected using the text for defining the topics. A criterion for keyword selection is to choose keywords which discriminate between topics. For any given topic region, the frequencies for different words are computed. These frequencies are used as estimates of $p(w|t)$, the probability that an observed word spoken in discussion of topic t would be word w. Then, for any word w, the conditional probability $p(t|w)$ that a given topic t is being discussed given that the word w is spoken can be computed using Bayes rule. These conditional probabilities will be different for each word. In addition, these keywords have the property that their frequency of occurrence varies between topics. For example, a good keyword for topic identification might occur frequently in one topic, but rarely in all others. This property can be quantified by selecting keywords $W$ having largest mutual information $I(T;W)$ with the set of topics $T$. $I(T; W)$ is defined as

$$I(T;W) = \sum_{t \in T}\sum_{w \in W} P(t,w)\log\frac{P(t|w)}{P(t)}$$

where $P(t|w)$ is the conditional probability of topic $t$ given keyword $w$.

Another technique for determining a good set of keywords for topic identification is by using the well-known CHI-square statistic. Keywords should occur frequently in some topics and rarely in others. In other words, their distribution should be significantly different from uniform. One measure of the non-uniformity of a distribution is the CHI-square statistic. Let L be the total number of topics and let $f_i$ be the number of times a word occurs in the ith topic. Then the total number of occurrences of the word is f, where

$$f = \sum_{i=1}^{L} f_i$$

If the word was distributed uniformly through the topics, the expected number of times it would occur in each topic would be f/L. The CHI-square statistic measures the deviation from the average and is written

$$\chi^2 = \sum_{i=1}^{L} \left(\frac{f_i - f/L}{f/L}\right)^2$$

Thus, words with the largest CHI-square can be chosen as keywords.

Another important factor in the choice of keywords is the accuracy with which the various words are recognized by the word spotter. This can be incorporated into the mutual information criterion by modeling the information channel consisting of speech followed by a word spotter. A set of keywords is chosen which maximizes $I(T; \hat{W})$ where $\hat{W}$ are the recognized keywords. This requires an estimate of $P(t | \hat{w})$, the probability of topic $t$ given that word $\hat{w}$ was spotted. This can be approximated using a confusion model for recognition errors. For example, $P(t|\hat{w})$ can be computed by

$$P(t|\hat{w}) = \sum_{w} P(t|w)p(w|\hat{w})$$

where $p(w|\hat{w})$ is the conditional probability that word w was spoken given that word $\hat{w}$ was recognized. See, for example, J. Kupiec, D. Kimber, V. Balasubramanian, Proceedings of the ARPA Human Language Technology Workshop (Plainsboro, New Jersey), pp. 373-377 (March 1994).

After the keywords are selected, a topic segmentation network is generated (step 212). The topic segmentation network is generated by first constructing a keyword based Hidden Markov Model for each determined topic, and then combining these models to form a single topic recognition network. In the case where the order and number of times a given topic will be discussed is unknown, the topic models would be combined in parallel to form the overall network. Constraints on the order in which topics are discussed could be incorporated by combining the topic models in other ways. For example, if it is known that topics T1, T2 and T3 are discussed sequentially, the overall model would be produced by serially combining the models for T1, T2, T3. The details of how Hidden Markov Models are combined into networks arc well known to those skilled in the art.

The user must also select the audio that is to be processed (step 214). This audio is, of course, the audio that will ultimately be processed in the topic segmentation network generated above during the topic segmentation process.

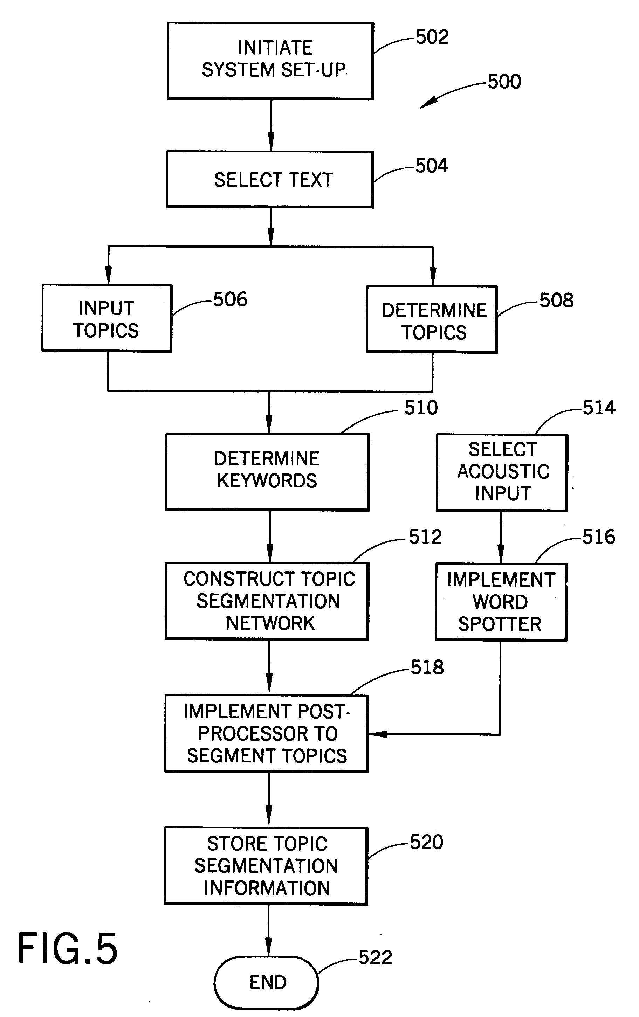

Two approaches to topic segmentation may be implemented. In the first approach (performed in one-stage) described in connection with Figure 2, topic segmentation and keyword spotting are performed simultaneously. Another approach, described in connection with Figure 5 below, uses a two-stage procedure in which keywords for all topics are first spotted in the audio using any available speech recognizer, for example, a single Hidden Markov Model recognizer. A second stage is then used to segment according to topic based on frequencies of the spotted keywords.

In general, keyword spotting may be achieved in a number of different ways. First, the spotting may be based on a large vocabulary recognition that recognizes all words and then identifies a subset of topic keywords. Second, the spotting may alternatively be accomplished by constructing a specially designed recognizer to locate only selected keywords by using Hidden Markov Models as keyword recognizers. All other words would be recognized by an alternative, or garbage, Hidden Markov Model that recognizes arbitrary sequences of phrases or a large vocabulary of words. The principles of the second alternative are incorporated into the embodiment of Figure 2.

Now, referring back to Figure 2, in the one-stage topic segmentation approach, each topic is associated with a Hidden Markov Model based on a language model appropriate to the given topic. The general idea is to create topic specific language models in the form of keyword spotters. Hidden Markov Models corresponding to these language models are then connected in parallel to form a topic segmentation network.

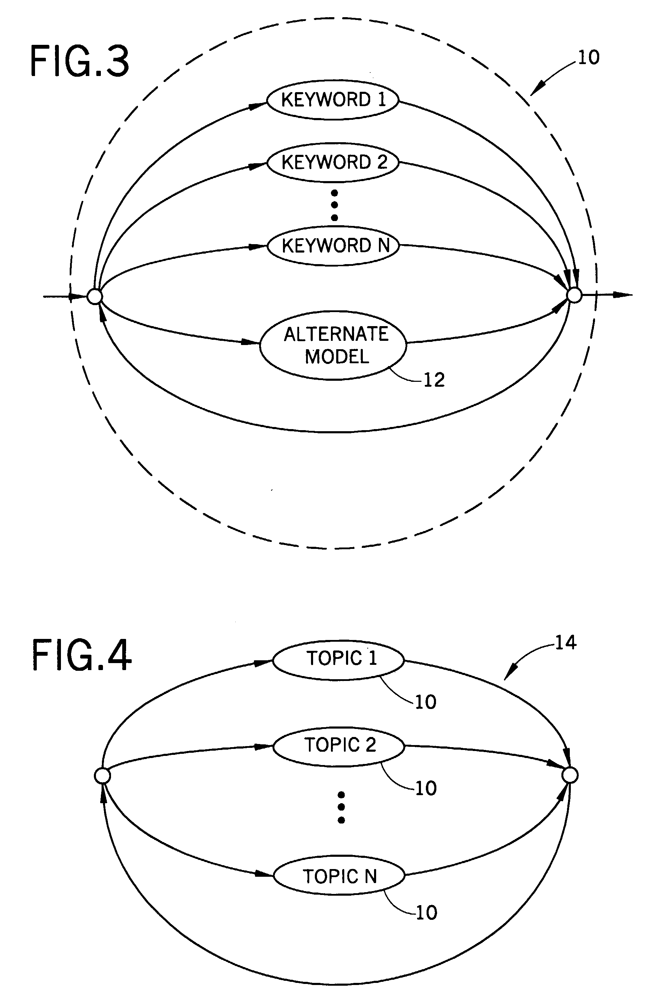

This is accomplished in the preferred embodiment by considering in a topic model 10 a set of keywords 1, 2...n and corresponding topic dependent probabilities in parallel with an alternate model 12 as shown in Figure 3. The keyword nodes 1, 2,...n are hidden Markov word models. The alternate model 12 matches all other possible words, and may in fact be a large vocabulary recognizer for all words other than these keywords. The transition probabilities leading to each keyword are based on the probabilities $p(w/t)$ of a keyword $w$ given the topic $t$.

As noted above, in step 212, a network 14 for performing topic segmentation is constructed from the topic models 10, as shown in Figure 4. Segmentation is achieved by running the well-known Viterbi algorithm on this network (step 216 in Figure 2) with acoustic features being input after selection of an audio source by the user (step 214 in Figure 2). The outgoing transition probabilities from each topic model are chosen to be very small to discourage spurious transitions among topics. A single alternate model may be shared among all topic models of the network, by tying the necessary output and transition properties.

When using the one stage segmentation, the system never distinctly determines keywords that are spoken because the acoustic features are directly decoded into topics using the large network of Hidden Markov Models. That is, the sequence of acoustics is run through the network and the maximum likelihood path (i.e. sequence of states) through the whole network is determined. This path indicates to which sub-topic networks the sequence of acoustics belongs. This, of course, directly results in the topic segmentation sought.

In this embodiment, the Viterbi algorithm is only run once on the network of Hidden Markov Models assembled. The algorithm uses dynamic programming to compute the maximum likelihood path (i.e. sequence of states) through the segmentation network given the sequence of feature vectors observed in the acoustic input.

The principle advantage of this one-stage segmentation is that all information is processed by a single optimal model. This allows for better estimates of recognition. Another advantage is that one-stage segmentation does not require windowing, as does the segmentation described in connection with Figure 5.

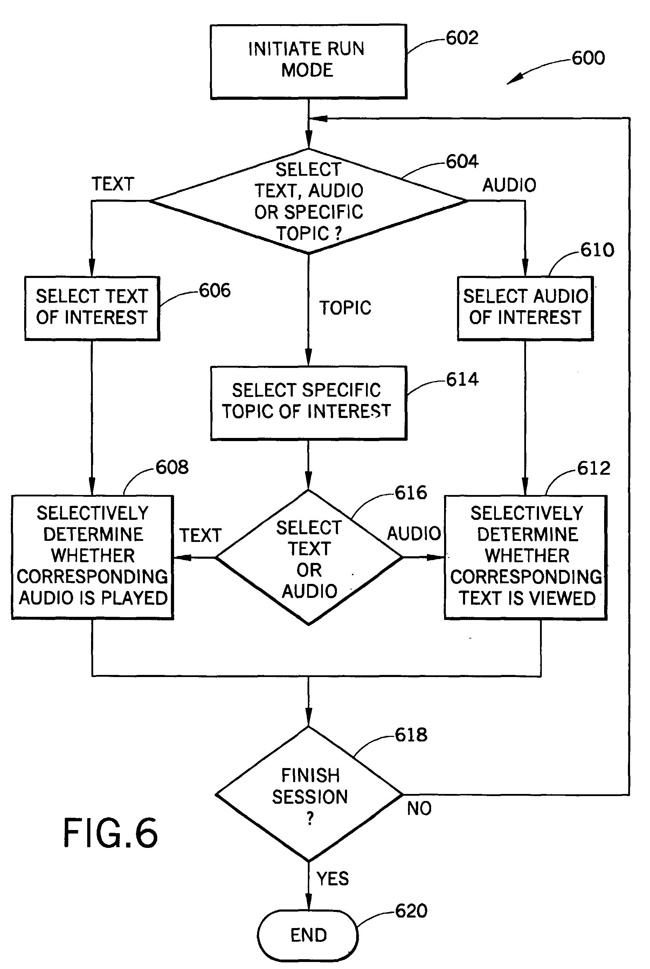

Once the segmentation is completed based on the above information, the segmentation information is stored in a predetermined manner in a suitable format to obtain the cross-index I referenced in Figure 1 (step 218). This information is then utilized by the system when a user uses the system as will be illustratively described in connection with Figure 6 below. After storage, the method terminates (step 220).

In a further embodiment of the invention, with reference to Figure 5, a method 500 is implemented. Similar to the method 200, the method is initiated by initiating a system setup (step 502). Text is then selected by the user (step 504). A topic determination is then made through user input of topics (step 506), the system determining topics (step 508) or a combination of both. Keywords are then determined (step 510).

After this step, the method 520 differs from the method 200 described in connection with Figure 2. More specifically, a topic segmentation network is constructed as described below (step 512). However, the topic segmentation network constructed does not have the level of granularity of the network of step 212. The network constructed in this instance resembles that of the topic network of Figure 4 and has as its input word count vectors not acoustic features (as is the case with the network described in connection with Figure 2).

The first stage in this two-stage segmentation method is to use the keyword spotting system described above to compute the locations and probabilities of occurrence of the keywords. Acoustic features are input to a word spotter after the audio recording is selected by the user (step 514) and the word spotter is implemented (step 516). Keyword spotting in the audio in this embodiment is performed using a large vocabulary speaker independent continuous speech recognizer. For this system, a system such as the HTK Hidden Markov Model toolkit (by Entropics) could be used to configure a large vocabulary continuous speech recognizer as a word spotter to identify the specified keywords. In addition to spotting the keywords, the system can be programmed to provide a probability that the keyword was present. This keyword probability can be used in the topic identification algorithm to weight the keyword frequency by the certainty with which the system was locating the keyword.

The second stage of the method is a post-processor which, using the probabilities and frequencies of occurrence of these keywords, as well as prior knowledge of topic sequence and duration, selects regions of the audio corresponding to each topic. In this regard, the output of the word spotter and a topic segmentation network are used to implement a post-processor including a Viterbi algorithm to segment the topics (step 518).

For the second stage of the method, the audio is partitioned into equal length, overlapping intervals. These intervals may be twenty seconds in length, and overlap by ten seconds, for example. This may also be accomplished as a part of the "first stage" of the method. Those of skill in the art will recognize that the salient feature is to obtain an input to the topic segmentation network that includes information indicating the number of times that a keyword occurs in the selected interval.

During the selected interval, therefore, the number of times a keyword is spoken is counted. The result is a word count vector that acts as an observation vector for the Hidden Markov Models used in step 518, wherein each state of the model has a probability distribution over keywords selected.

The likelihood of an interval belonging to a topic, given each of the topics, is then computed. The probabilities of the topics for the interval are computed from the topic likelihoods using Bayes rule with the assumption that prior probabilities for each topic are equal. The topic probabilities are then used in a Markov sequence model whose states are the topics. This is similar to a Hidden Markov Model, whose states are the topics and whose output probabilities are the topic probabilities for the intervals. However, during training the states are not hidden so that Baum-Welch training is not used in estimating the output probabilities. The standard Viterbi algorithm is used to find the most likely sequence of states, hence topics, given the topic probabilities and the transition probabilities of the model.

The transition probabilities between states specify likely topic sequences. In the general case, any topic may follow any other topic. However, in some cases prior information might constrain the topic sequence. For example, a meeting agenda gives the order in which topics are to be discussed. This could be used to constrain the sequence of topics (assuming that the meeting actually follows the agenda). Transition probabilities within a state are used to model the expected length of time a given topic is discussed.

The probability $p(Tj)$ for topic $j$ in a given interval is computed as follows. First, the weighted number of occurrences $n_i$ for each keyword $w_i$ is computed by summing the probability (produced by the word spotter) that an instance of the keyword $i$ was spotted in the interval. If keywords are spotted with probability one or zero, $n_i$ is the number of times keyword $i$ is spotted in the interval.

Using the related text data for a given topic, the probability $p(w_i/T_j)$ can be estimated using the number of occurrences of keyword $i$ in the text for topic $j$ . Using a multinomial model, the log of the likelihood $l(T_j)$ for topic j in the interval is then

$$\log(1(T_j))=\sum_i n_i \log(p(w_i \backslash T_j)) \qquad (1)$$

The probability $p(T_j)$ of topic $j$ is computed as

$$p(T_j)=\frac{1(T_j)}{\sum_k 1(T_k))} \qquad (2)$$

The two-stage segmentation embodiment provides advantages over the one-stage approach. For example, the two-stage technique is more modular. Therefore, keyword spotting may be accomplished by a variety of methods and is not limited by being embedded within another model.

After the topics are segmented based on the information obtained, the topic segmentation information is stored in a suitable format to obtain the cross-index of Figure 1 (step 520). The method is then terminated (step 522).

Once the system is set up by either the method of Figure 2 or Figure 5, and the index, or segmentation information is established, users can access the system to conduct a variety of operations. Users can designate text and selectively play corresponding audio. Users may also designate audio for listening and selectively determine whether corresponding text should be viewed. The user may use the cross-index, or topic index, which is generated based on the segmentation information, to select a topic and then determine whether to view the text or listen to the audio.

It should be appreciated that the method of Figure 6 described below involves a variety of user interface issues. These issues, as well as known solutions, should be apparent to those skilled in the art.

With reference now to Figure 6, the run mode of the system is initiated (step 602). A determination is first made whether the user is selecting a text document, recorded audio, or a specific topic listed in the topic index (step 604). If text is selected, the text of interest is specified (step 606). The user then selectively determines whether corresponding audio is played during the session (step 608).

If audio is initially selected by the user, audio recording of interest is specified (step 610). The user then selectively determines whether corresponding text should be viewed while listening to the audio during the session (step 612).

If specific topics are sought to be reviewed, the topic of interest specified based on the index (step 614). The user then determines whether text or audio is desired (step 616). If the user selects text, the user may then selectively determine whether corresponding audio should be played as well (step 608). If the user selects audio, the user can then selectively determine whether corresponding text should be viewed (step 612). The user determines if the session should end (step 618). If not, steps 604-618 are repeated. If the session is finished, the method is terminated (step 620).

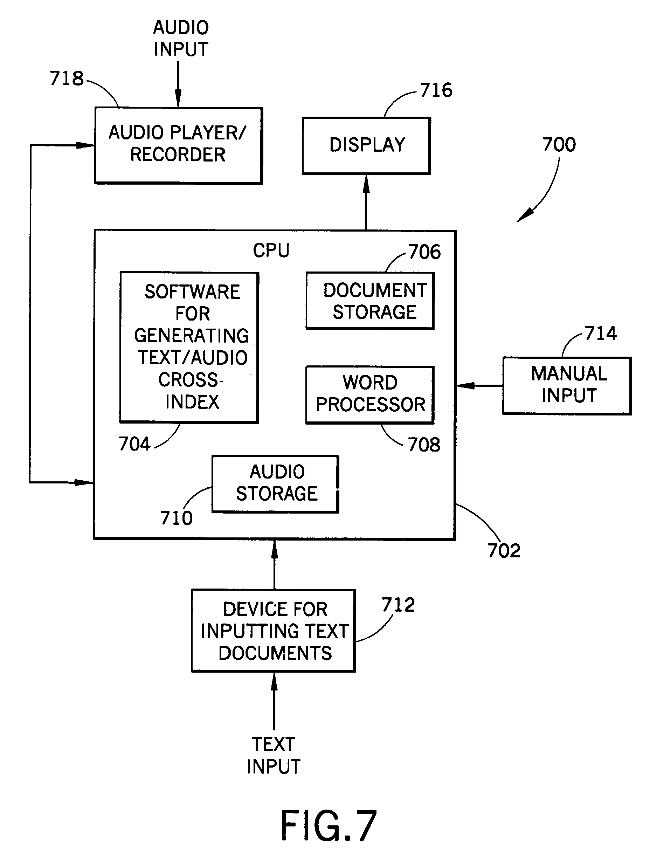

A system in which the method of the invention may be implemented is illustrated in Figure 7. As noted above, implementation of the present invention presents a multitude of user interface issues. Accordingly, depending on the resolution of those issues, the system may vary.

As shown, however, an exemplary system 700 includes a CPU 702 having a storage area for software for generating a text/audio cross-index 704, a document storage area 706, a word processor 708 and an audio storage area 710. A device for inputting text documents (e.g. scanner, OCR device, etc.) 712 and manual input devices 714 provide input to the system. The manual input devices may include keyboards, mice, trackballs, joysticks, ...etc. Display 716 generally operates as an output for the system (although may also provide input if, for example, touch screen techniques are employed) and the audio player/recorder 718 provides input to the system and may operate as an output device as well.

## Claims

1. A method for correlating text contained in at least one electronically stored document and recorded audio corresponding to discussion of the at least one document, the method comprising the steps of:

   determining topics reflected in the text;
   determining keywords contained in the text and probabilities that a keyword belongs to a topic;
   constructing a topic segmentation network based on the keywords and the probabilities;
   inputting acoustic features of the recorded audio to the topic segmentation network;
   determining a maximum likelihood path through the network given the acoustic features; and,
   segmenting the recorded audio into the topics based on the determining of the maximum likelihood path.

2. A method for correlating text contained in at least one electronically stored document and recorded audio corresponding to discussion of the at least one document, the method comprising the steps of:

   determining topics reflected in the text;
   determining keywords contained in the text and probabilities that a keyword belongs to a topic;
   constructing a topic segmentation network based on the keywords and the probabilities;
   inputting acoustic features of the recorded audio to a keyword spotter to spot keywords
   determining a number of occurrences of keywords within a predetermined time interval;
   inputting the number of occurrences to the topic segmentation network;
   determining a maximum likelihood path through the network given the acoustic features; and,
   segmenting the recorded audio into the topics based on the determining of the maximum likelihood path.

3. A system for correlating text contained in at least one electronically stored document and recorded audio corresponding to discussion of the at least one document, the system comprising:

   means for determining topics reflected in the text;
   means for determining keywords contained in the text and probabilities that a keyword belongs to a topic;
   means for constructing a topic segmentation network based on the keywords and the first probabilities;
   means for inputting data based on acoustic features of the recorded audio to the topic segmentation network;
   means for determining a maximum likelihood path through the network given the acoustic features; and,
   means for segmenting the recorded audio into the topics based on the determining of the maximum likelihood path.

TEXT

TOPICS

AUDIO

T

A

I

# FIG.1

FIG.2

FIG.3

KEYWORD 1

KEYWORD 2

KEYWORD N

ALTERNATE
MODEL

12

10

FIG.4

TOPIC 1

TOPIC 2

TOPIC N

10

10

10

14

```
          ┌─────────────────┐
          │    INITIATE     │──── 502
          │ SYSTEM SET-UP   │
          └─────────────────┘        ╲ 500
                  │
                  ▼
          ┌─────────────────┐
          │  SELECT TEXT    │──── 504
          └─────────────────┘
                  │
         ┌────────┴────────┐
         ▼                 ▼
   ┌──────────┐      ┌──────────────┐
   │  INPUT   │─506  │  DETERMINE   │─508
   │  TOPICS  │      │   TOPICS     │
   └──────────┘      └──────────────┘
         │                 │
         └────────┬────────┘
                  ▼
          ┌─────────────────┐        ┌──────────────┐
          │   DETERMINE     │─510    │   SELECT     │─514
          │   KEYWORDS      │        │  ACOUSTIC    │
          └─────────────────┘        │   INPUT      │
                  │                  └──────────────┘
                  ▼                          │
          ┌─────────────────┐        ┌──────────────┐
          │ CONSTRUCT TOPIC │─512    │  IMPLEMENT   │─516
          │ SEGMENTATION    │        │    WORD      │
          │   NETWORK       │        │  SPOTTER     │
          └─────────────────┘        └──────────────┘
                  │                          │
                  ▼            ─518           │
          ┌─────────────────┐                │
          │ IMPLEMENT POST- │◄───────────────┘
          │  PROCESSOR TO   │
          │ SEGMENT TOPICS  │
          └─────────────────┘
                  │
                  ▼
          ┌─────────────────┐
          │  STORE TOPIC    │─520
          │ SEGMENTATION    │
          │  INFORMATION    │
          └─────────────────┘
                  │
                  ▼
              ╭─────────╮
              │   END   │─522
              ╰─────────╯
```

FIG.5

FIG.6

AUDIO
INPUT

718

AUDIO PLAYER/
RECORDER

716

DISPLAY

700

CPU

706

SOFTWARE
FOR
GENERATING
TEXT/AUDIO
CROSS-
INDEX

DOCUMENT
STORAGE

714

WORD
PROCESSOR

MANUAL
INPUT

704

708

AUDIO
STORAGE

710

702

DEVICE FOR
INPUTTING TEXT
DOCUMENTS

712

TEXT
INPUT

FIG.7